# EUROPEAN PATENT SPECIFICATION

(11) **EP 0 595 887 B1**
(45) Date of publication and mention of the grant of the patent: **02.12.1998**
(21) Application number: 92915469.8
(22) Date of filing: 29.06.1992
(51) Int. Cl.: A47C 27/10, A43B 13/38, B32B 3/30, B32B 3/12, E04C 2/34, A47C 27/14

(54) **CUSHIONING STRUCTURE**
DÄMPFERKONSTRUKTION
STRUCTURE D'AMORTISSEMENT

(30) Priority: 01.07.1991 US 723576; 31.01.1992 US 830181
(43) Date of publication of application: 11.05.1994
(73) Proprietor: RAVEN MARKETING, INC., Westerville OH 43081 (US)
(72) Inventor: COLVIN, David, P., Apex, NC 27502 (US); POTTER, Craig, S., Raleigh, NC 27614 (US)
(74) Representative: Warren, Keith Stanley
(86) International application number: US9205533
(87) International publication number: WO9300845

(56) References cited:
- WO-A-90/14942
- FR-A- 1 306 439
- GB-A- 293 086
- GB-A- 848 457
- US-A- 2 275 575
- US-A- 2 347 207
- US-A- 3 294 387
- US-A- 3 549 201
- US-A- 3 746 605
- US-A- 3 837 990
- US-A- 4 356 642
- US-A- 4 422 194
- US-A- 4 619 055
- US-A- 4 869 939
- US-A- 5 030 501

## Description

This invention relates to a fluid inclusive, composite, cushioning structure in which a plurality of elements are formed to enclose a fluid that is responsive to outside impact forces and to reduce the damaging affects of such forces. More particularly, it relates to structures having pliable cells that are filled with air or other gaseous fluids to cushion impacts, such as air bubble and air bag devices, in which the air compresses under the forces of suddenly applied impact loads to resist the forces, thereby cushioning the load. Even more particularly, the interval flow of fluid is in a controlled manner to reduce the rebound of the impacting body.

The general problems of damage caused by suddenly applied impact loads are well recognized. Such damages include breakage and destruction of property as well as injury to persons.

Because the occurrence of such impact loads is beyond the control of those who have a need to ship products in commerce by rail, truck, or air and other common carrier transportation, a most common approach to the problem is to provide packaging material and cushioning material in a position around the object in a shipping container to absorb the impacts before they have a damaging effect on the contents being shipped.

In a like manner, persons who are likely to be subjected to impacts either by falling or contact in sports such as football and other "contact" sports often employ cushioning materials in the form of padding to absorb the impacts.

Elderly persons are particularly susceptible to injury, primarily broken bones, through falls and sudden impacts. A major problem for the elderly, who are forming an increasing portion of the population, is susceptibility to broken bones from falls and sudden impacts. Persons of an advanced age find it very difficult to recover from such injuries, and broken hips and joints often lead to complications shortening life.

In still other instances some items or products regularly receive and resist impacts in their normal operation. For instance, the soles of shoes and the treads of tires or objects which repetitively receive impacts in normal operation. In recent years, so called "athletic" or "walking" shoes have been provided with soles and insoles that are thought to be helpful in cushioning the impacts of walking, jogging, and other strenuous endeavor. The cushioning structure of this invention is especially useful for this application.

In still other instances, design and construction efforts have been directed to cushioning the impacts of automobile collision with cushioning materials that are particularly light in weight but offer good cushioning performance if such impact collisions occur. Special materials in the framework of vehicles are provided for this purpose. The cushioning structure of this invention is especially useful for this application.

Because packing materials add to the weight and volume of the freight and objects being shipped, lightweight and compactness are objective features addressed by the prior art as well as many of the products presently in use. However, such objectives should be ideally sought without a reduction in the performance of the material. It is an object of the present invention to achieve a maximum capability for the absorption of impact and energy imparted to the material by the forces impacting on the structure with a minimum energy available for rebound. It is a further object to provide an improved ratio of material usage, material cost, and energy absorption by means of the unique form and geometrical shapes of the elements in the structure and their relation to each other. While prior practitioners have used some of the form and features of the present invention their unique combination presented herein has not been previously taught.

One prior art cushioning structure (on which the precharacterising part of claim 1 is based) is described in patent GB 848457. The cushioning structure includes a layer of foamed material at least one side of which has a repeated pattern of indentations and projections. Although two of these layers may be superimposed to form air voids therebetween air may pass freely between the voids and through the foam from between the voids to the ambient atmosphere. Consequentially the structures resistance to high impact loading is poor.

A further prior art cushioning structure is described in patent WO90/14942, in which a stratum is adhered to opposite sides of a cellular structure such that a throttled flow of fluid is possible between adjacent cells. Walls of the cells are not adapted to absorb any energy themselves.

Although the prior art addresses many of the relevant factors that bear on the construction of an improved cushioning structure, none teach the unique form found in the cushioning structure of this invention as defined in claim 1.

In summary, this invention is a cushioning structure for dampening shocks comprising one or more planar stratum or sheets of pliable material having a plurality of cell structures bonded and sealed thereto with each cell structure comprising a polygon including a plurality of walls in upstanding relationship to the plane of the stratum. Each cell is closed and sealed at each end, with at least one end being one stratum, so that each cell structure comprises a sealed enclosure having a fluid therein. Each cell is connected to adjacent cells by way of a restricting airway that acts as a valve which can be varied during fabrication by adjusting the ratio of the cell volume to he cross-section of the connecting airway cross sectional area.

In a preferred embodiment, the structure includes two sheets of plastic material such as polyethylene or polyvinylethylene of a thin pliable compounding composition, with hexagonally shaped cells that are bonded to an overlay second sheet in such a way as to permit controlled airflow between adjacent cells. With the proper spacing of the hexagonal cells, two of the described assemblies can be meshed or mated together with the inside cells of one assembly nesting into the spaces between the cells of the second assembly. The cell walls are bonded to the outside sheets and communication means are provided between adjacent cells so that the air or gas may pass from one cell to the next when an impact force strikes a localized area on the surface of the structure and the air is restricted or slowed from re-entering the original cell in order to reduce the normal rebound.

In another embodiment, the invention includes a cushioning material structure of resilient material formed into the structure comprising: (a) a plurality of generally planer and opposing lateral sides, having a plurality of indentures formed in one or more of the opposing sides in the general configuration of a grid like surface on the sides; (b) the indentures are constructed in geometric shapes with walls of structural integrity resulting from their shape and arranged in a grid in repeating patterns that provide a continuum performance laterally throughout the structure.

Appropriate selection of material, wall thicknesses, and the connecting cross-sectional areas between the cells, provides the means for optimizing the performance of the structure in absorbing the energy of impact that is delivered to the surface of the material while minimizing the amount of rebound from the structure. By using an appropriately selected combination of different connecting cross-sectional areas throughout the structure, the resistance to different kinds and quantities of impacts can be provided to produce the desired deceleration.

The foregoing and other advantages of the invention will become apparent from the following disclosure in which preferred embodiments of the invention are described in detail and illustrated in the accompanying drawings. It is contemplated that variations and structural features and arrangement of parts may appear to the person skilled in the art, without departing from the scope of sacrificing any of the advantages of the invention which is delineated in the included claims.

Figure 1 is a plan view of one side of the cushioning structure of this invention with a transparent strata on the upper surface.

Figure 2 is a sectional view through the composite assembled structure taken on the line 14-14 of the Figure 1.

Figure 3 is an exploded sectional view taken on the line 15-15 of Figure 1.

Figure 4 is an exploded sectional view taken on the line 16-16 of Figure 1.

Figure 5 is a sectional view of a typical multi layer composite structure taken on a line similar to Figure 2.

Figure 6 is an exploded sectional view of an alternative cushioning structure of the invention.

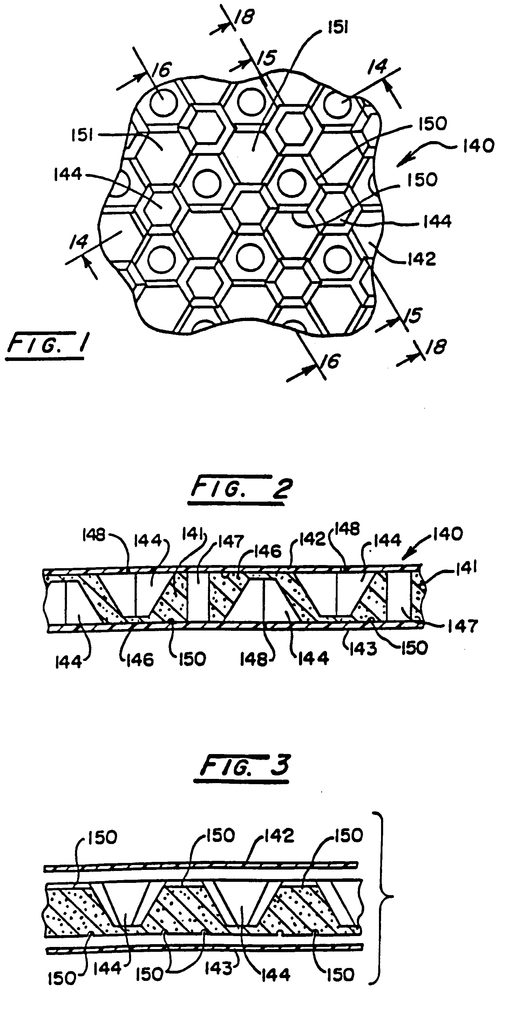

Referring to Figures 1 - 4, an embodiment of a cushioning structure 140 according to the invention is shown including a formation of foamed resilient material 141. As shown the foamed material 141 is sandwiched between the plurality of two strata 142 and 143 respectively. The cushion material 141 is formed to include indentures 144.

In another embodiment of the invention the cushion material 154 is formed to include indentures 144 on one side rather than on opposing sides. In this embodiment, shown in Figure 6, the cushion material 154 may preferably be relatively smooth on the unindentured side 160 and comprises continuous foam except for the side that touches in contact with a stratum 155. In both of these embodiments the indentured side includes passageways 150 and a grid like structure.

In some circumstances the cushion material 154 may be bonded to a structural component 155 of the object with which it is used, such as an insole or element of a shoe or a panel or door of an automobile. In this situation, the insole or structural element serves as the counterpart off the opposing stratum 155. The structure off this embodiment is different from the dual strata structure of Figure 2, and is distinguished from an unsandwiched unindentured foam which has been conventionaly provided as an insole in shoes.

The term "resilient material" 141, 154 is intended to include materials that by their internal structure have a resilience that tends to bring them back to their original formed shape when a load on them is removed (ie. elasticity). Such materials are often termed "foam" when the void space ratio is high relative to denser material, although denser materials may be "resilient" if they are elastic.

In Figure 1 the upper stratum 142 is depicted as transparent so that the internal structure grid like configuration of the formed resilient cushioning material 141 may be discerned through the stratum 142.

The strata 142 and 143 may be of pliable or semipliable, or even rigid, material such as polymer, formulated to provide different degrees of flexibility, and other physical properties. The strata 142, 143 are bonded to the cushion material 141 by well-known conventional techniques including adhesive and heat sealing processes. The bonding may take place over the entire exposed surface 146 of the cushioning material 141 or it may be provided at intermittent points of contact between the surfaces.

When the structure is assembled the indentures form cells with molded interconnecting passageways, channels or conduits 150.

The indentures 144 are shown as truncated polygon in shape, because it is believed that these provide formations that have exceptional structural integrity. Other forms of indentures could be useful and selected depending on the parameters of performance that are to be provided by the total structure. Semispheres could be a useful form although their spacing would be less compact when the indentures are provided in a grid like mating relationship on opposite sides 146 of the foam cushioning material.

In the embodiment shown in Figures 1 and 2, a plurality of tube-like apertures 147 are provided from one side 146 to the other side 146, and when constructed in the vertical orientation, as shown, provide further structural integrity to the foamed cushioning material, and/or compressible fluid cells for their cushioning properties.

When the composite structural construction of the Figures 1 - 5 are bonded and sealed together, the indentures 144 and the apertures 147 comprise a plurality of cells for the containment of fluid, such as air, which may be pressurized at assembly or at ambient atmospheric pressure as desired for the performance of the structure.

Referring to Figures 1 and 3, of special significance are the passages 150 that provide fluid communication from one cell to the next, and function as described below.

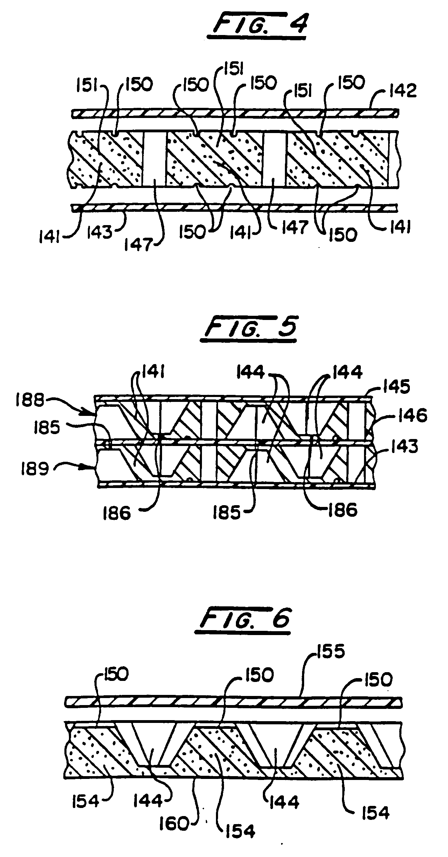

Referring to Figure 5, a structure comprising a plurality greater than two of stratum 142, 143 and 145 are shown with a plurality of formed cushion material 141 bonded and sealed there between. In this embodiment, the benefits of the invention are additive although the amount of material for the equivalent performance is reduced.

As shown in Figures 1 and 4, the grid like matrix includes the plurality of relatively "solid" portions 151 as a further structural component.

Referring further to Figure 2, in another aspect it has been conceived that the strata 142 and 143 may be provided with small incontinuities, apertures or "pin-prick"-like perforations 148 which open when the strata 142 and 143 are stretched by an impact force on the structure. The perforations are constructed to perform like valves which open or close depending on the characteristics of the material of the strata, the thickness of the sheet and the pressure to which it is subjected upon impact. Such controlled venting in and out of the structure to the external atmosphere would be expected to provide a measure of damping, but is not believed to provide controlled rebound characteristics.

The pin prick flap type pressure relief and transfer system described in the previous paragraph may be embodied in the apparatus shown in Figure 5 in which instance the apertures 185 and the apertures 186 provide exchange of fluid between the separate layers 188 and 189 to further provide fluid transfer means between the separate layers. This provides a further dampening effect in the "vertical Z direction", as distinguished from the "lateral X-Y direction", provided by the channels 150 and valve-like apertures in walls separating adjacent indentures.

The foamed resilient material 141 comprises a matrix of hexagonal, hollow three-dimensional polygon members in juxtaposed or contacting relationship one to the next.

The cell members are of hexagonal shape in cross-sectional plan. In the finally assembled condition the edges of the individual hexagonal cells are bonded to the top stratum 142 and bottom stratum 143 at its edges. The bond formed at the edges is a substantially hermetically sealed connection so that in the assembled condition the matrix includes a plurality of generally hexagonal cells separately sealed one from the next, except as specifically otherwise provided.

Since the materials are heat sealable the various seals described herein may be accomplished by conventional heat sealing means. Adhesive could also be used.

The structure is hermetically closed at the periphery by a closure means and an inlet is provided for the admission of a fluid such as air or other gas which may be at a pressure above surrounding atmosphere or environment in which the structure is placed. The structure is constructed of generally pliable materials, usually plastics, including vinyl and/or polyethylene type films.

Dimensionally it is conceived that the structure could be between about 1 and 30 centimeters "thick", i.e. the distance from the outside of one stratum to the other. The thickness of the sheet materials from which the strata 142 and 143 are formed may be between about 0.25 to 2540 µm (.01 and 100 mils).

In the embodiment shown the matrix cells comprise hexagonal polygons. Such shape has been chosen because of the unique form of a hexagon that permits complete nesting of the vertical surfaces of the cell one to the next. Nevertheless, other forms of polygons may provide the advantages of this invention and are to be considered as within the concepts worthy of further evaluation and usefulness in the application of the principles that are embodied in the structure.

Four sided polygons or cubes are representative of another polygon configuration that may be useful in some circumstances.

Still other forms of polygons are within ready conception, for instance, pentagons or cones.

By the proper selection of the size of the conduits or passages 150, the rate of fluid flow may be controlled and serve to "valve" the rate of the fluid passage from one cell to the next. Such conduits may be provided by allowing unbonded areas between the end of a cell and the stratum. This controlled venting of the compressed air spring within the impacted cell serves to maximize the absorption of the impact energy while minimizing the energy available for rebound. The difference in pressure between the impacted and the unimpacted, adjacent cells aids the controlled reinflation of the impacted cell in order the provide protection from repeated impacts.

As mentioned above one-way valve-like apertures may be provided between the walls of two mating hexagonal structures which aid the reduction of rebound energy. The apertures open upon an impact due to the columnar buckling of the cell walls and pass fluid from the impacted area to adjacent areas when the pressure on the one side increases to a value higher than the pressure on the other side. When the pressure equalizes during the structural rebound, the resilience of the foamed material causes the valved opening to close or partially close thereby restricting the reverse flow by allowing the pressure to gradually equalize.

By means of a combination of the columnar buckling of the supporting hexagonal walls, the restricted airflow through the connecting passages between the cells, and the valved airflow between mating structures, the rate is controlled at which the force of impact on the surface of the structure is dissipated throughout the structure and the energy available for rebound is minimized.

In use, the cushioning structure is placed external to a fragile body or between a wall such as the side of a shipping carton, and an object such as a product to be shipped in commerce. It may be expected that the object will encounter sudden loads and impacts during the course of its shipment to its destination. Such impacts produce sudden loads on one side of the structure and forces are created against one side stratum, which depend upon the amount of force and the area of the object that inputs on the surface. The reaction created in the structure responds to the impact load by compressing the fluid through lateral pressure forces radiating from the place of impact form one cell to the next to disperse the load and reduce the force at a rate which prevents damage to the object.

In an alternative situation, the structure may be formed as wearing apparel or padding for the projecting and more fragile components of a persons body. If the padding were worn as a pants or skirt about the hips of a person,and the person falls, the protruding hip joints are a load to which the structure reacts.

Because of its unique construction and the lateral dispersal of the impact load, it had been found that the energy absorption of this structure exceeds prior art apparatus tested that are in use for these purposes. In actual tests the energy absorption has been found to be 30 - 100% higher than such packing materials as "bubble packs" or foam materials such as rubber or plastic foam materials that are presently in the marketplace for this purpose.

It is believed that the further enhancement of the surprisingly outstanding results are provided by the damping by the fluid as its flow is restricted to adjacent cells, by the valve action between the mating hexagonal structures, and the strength and controlled columnar buckling produced by a the crumpling of the inherently strong polygon structures.

Since the structure is more "efficient" (i.e. energy absorbing per unit of thickness) it would be useful in various other applications such as life jackets, baseball catcher protections hockey equipment, football helmets, shoulder and chest protectors and seat cushions.

The prototypes of the invention were constructed to provide both a fast response and well regulated collapse while preventing the "bottoming out" of the structure. The invention presents a new and novel concept of distributed air cell venting and the controlled deformation of its internal structural members. Because of this combination, the wall thickness of the structure can be constructed to withstand a wide range of selected pre-loading. The pre-loading of the prototype unity was established to provide for less than 4.5 kg (10 pounds) without premature collapse. This may be selectively increased in other cushioning structures by increasing the wall thickness of the cells and/or the orifices and cells. The energy absorption and rebound is regulated by the ventilation rate of the structure.

It has been deemed important that the invention includes the ability for mass production and low cost.

It is herein understood that although the present invention has been specifically disclosed with the preferred embodiments and examples, modifications and variations of the concepts herein disclosed may be resorted to by those skilled in the art. Such modifications and variations are considered to be within the scope of the invention and the appended claims.

## Claims

1. A cushioning structure (140) including resilient foamed material (141) having generally planar and opposing first and second lateral sides (146) and a plurality of indentures (144) formed in a grid-like repeating pattern in said first side to provide a continuum of cushioning performance throughout the structure,
characterised in that:
said indentures (144) in said resilient foamed material (141) define geometric shapes with structurally integral walls;
the cushioning structure (140) further includes a first planar stratum (142) sealiningly bonded to said first side (146) of said foamed material (141) closing the indentures (144) to form cells; and
fluid passage means (150) are provided between adjacent cells for the transfer of fluid therebetween resulting from a pressure increase in one or more cells as a consequence of shock loads upon an outer surface of said first stratum (142);
whereby said cushioning structure (140) provides a continuum of cushioning performance laterally throughout the structure.

2. The cushioning structure (140) according to claim 1 further comprising a second planar stratum (143) sealingly bonded to said second side (146) of said foamed material (141) closing indentures (144) corresponding to those in the first side forming further cells, fluid passage means (150) being provided between adjacent cells in the second side for the transfer of fluid therebetween.

3. The cushioning structure (140) according to claim 1 or 2 wherein apertures (148) to external atmosphere are provided in the or each stratum (142, 143) to provide a valving action in the passage of fluid from all indentures (144) to the external atmosphere.

4. The cushioning structure (140) according to claim 1, 2 or 3 wherein the amount of fluid communication between the cells *via* the fluid passage means (150) is controlled at a preselected rate by a valving action of passages for the fluid communication to provide a preselected dampening for a preselected range of shocks.

5. The cushioning structure (140) according to any preceding claim wherein the number of strata (142, 143, 145) is greater than two and the strata have resilient foamed material (141) bonded therebetween in a multi-layer sandwich arrangement.

6. The cushioning structure (140) according to any preceding claim wherein the indentures (144) are arranged in substantially quadratic repeating patterns.

7. The cushioning structure (140) according to claim 6 wherein the geometric shapes and indentures (144) include a plurality of truncated prism forms whenever they are included in the repeated quadratic pattern.

8. The cushioning structure (140) according to any one of claims 1 to 6 wherein each indenture (144) is in the form of a polygon including a plurality of walls in substantially upstanding relationship to a plane defined by said first side (146) and having a closed and sealed end in a position opposite to said first side (146).

9. The cushioning structure (140) according to any preceding claim wherein the geometric shapes and indentures (144) include a plurality of tube-like apertures (147) extending from said first side to said second side.

## Patentansprüche

1. Dämpferstruktur (140), die ein federndes Schaummaterial (141) mit im allgemeinen ebenen und gegenüberliegenden ersten und zweiten lateralen Seiten (146) und einer Vielzahl von Einschnitten (144), die in einem gitterartigen sich wiederholenden Muster in der ersten Seite gebildet sind, um ein Kontinuum von Dämpferleistung durch die Struktur zu liefern,
dadurch gekennzeichnet dass:
die Einschnitte (144) in dem federnden Schaummaterial (141) geometrische Gestalten mit strukturell integralen Wänden definieren;
die Dämpferstruktur (140) weiterhin eine erste ebene Schicht (142) einschließt, die abdichtend an die erste Seite (146) des Schaummaterials (141) gebunden ist, was die Einschnitte (144) schließt, um Zellen zu bilden; und
ein Fluiddurchgangsmittel (150) zwischen benachbarten Zellen für die Übertragung von Fluid dazwischen geliefert ist, die sich von einer Druckerhöhung in einer oder mehreren der Zellen als Folge von Stoßbelastungen auf eine äußere Oberfläche der ersten Schicht (142) ergibt;
wobei die Dämpferstruktur (140) ein Kontinuum von Dämpferleistung lateral durch die Struktur liefert.

2. Dämpferstruktur (140) nach Anspruch 1, die weiterhin eine zweite ebene Schicht (143) umfasst, die abdichtend an die zweite Seite (146) des Schaummaterials (141) gebunden ist, was Einschnitte (144) schließt, die denen in der ersten Seite entsprechen, die weitere Zellen bilden, wobei ein Fluiddurchgangsmittel (150) zwischen benachbarten Zellen in der zweiten Seite für die Übertragung von Fluid dazwischen geliefert ist.

3. Dämpferstruktur (140) nach Anspruch 1 oder 2, in der Öffnungen (148) zu der äußeren Atmosphäre in der oder jeder Schicht (142, 143) geliefert sind, um eine Ventilwirkung in dem Durchgang von Fluid von allen Einschnitten (144) zu der äußeren Atmosphäre zu liefern.

4. Dämpferstruktur (140) nach Anspruch 1, 2 oder 3, in der die Menge der Fluidverbindung zwischen den Zellen über das Fluiddurchgangsmittel (150) von einer Ventilwirkung von Durchgängen für die Fluidverbindung mit einer vorher ausgewählten Rate gesteuert wird, um eine vorher ausgewählte Dämpfung für einen vorher ausgewählten Bereich von Stössen zu liefern.

5. Dämpferstruktur (140) nach einem vorhergehenden Anspruch, in der in der die Anzahl von Schichten (142, 143, 145) größer als zwei ist, und die Schichten ein federndes Schaummaterial (141) dazwischen in einer Vielschichteinlagerungsanordnung gebunden haben.

6. Dämpferstruktur (140) nach einem vorhergehenden Anspruch, in der die Einschnitte (144) in im wesentlichen quadratischen sich wiederholenden Mustern angeordnet sind.

7. Dämpferstruktur (140) nach Anspruch 6, in der die geometrischen Gestalten und Einschnitte (144) eine Vielzahl von abgestumpften Prismaformen einschließen, wenn sie in dem wiederholten quadratischen Muster eingeschlossen sind.

8. Dämpferstruktur (140) nach einem der Ansprüche 1 bis 6, in der jeder Einschnitt (144) in Form eines Polygons ist, das eine Vielzahl von Wänden in einem im wesentlichen aufrecht stehenden Verhältnis zu einer Ebene einschließt, die von der ersten Seite (146) definiert ist und ein geschlossenes und abgedichtetes Ende in einer Stellung gegenüber der ersten Seite (146) hat.

9. Dämpferstruktur (140) nach einem vorhergehenden Anspruch, in der die geometrischen Gestalten und Einschnitte (144) eine Vielzahl von rohrartigen Öffnungen (147) einschließen, die sich von der ersten Seite zu der zweiten Seite erstrecken.

## Revendications

1. Construction d'amortissage (140) y compris une matière de mousse flexible (141) ayant généralement des premier et deuxième côtés latéraux généralement planaire et opposés (146) et une pluralité d'empreintes (144) formées en motif sur grille répétitive dans le premier côté et pour assurer la continuation de la performance d'amortissage dans la construction entière,
**caractérise en ce que**
lesdites empreintes (144) dans ladite matière de mousse flexible (141) définissent des formes géométriques ayant une structure de parois intégrales.
la construction d'amortissage (140) comporte en outre une première couche planaire (142) soudée hermétique audit premier côté (146) de ladite matière de mousse (141) refermant les empreintes (144) pour former des cellules; et
des moyens de transit de fluide (150) sont prévus entre les cellules adjacentes pour le transfert du fluide entre les deux résultant d'une augmentation de pression en l'une ou plusieurs des cellules suite à des contraintes d'impact contre la surface extérieure de ladite première couche (142);
selon lequel ladite construction d'amortissage (140) assure une continuation de la performance d'amortissage en sens latéral au travers de toute construction.

2. La construction d'amortissage (140) selon la revendication 1 comportant en outre une deuxième couche planaire (143) soudée hermétique audit deuxième côté (146) de ladite matière de mousse (141) refermant les empreintes (144) correspondant à celles dans le premier côté formant d'autres cellules, des moyens de transit de fluide (150) étant prévus entre les cellules adjacentes du deuxième côté permettant le transfert du fluide entre elles.

3. La construction d'amortissage (140) selon la revendication 1 ou 2 suivant laquelle les orifices (148) donnant en atmosphère prévus dans la couche ou chacune d'entre elles (142, 143) pour prévoir un effet de valve au passage du fluide à partir de toutes les empreintes (144) vers l'atmosphère.

4. La construction d'amortissage (140) selon la revendication 1, 2 ou 3 suivant laquelle le volume de communication de fluide entre les cellules par l'intermédiaire des moyens de transfert de fluide (150) est contrôlé selon un débit présélectionné par un effet de valve des passages de communication de fluide pour assurer un amortissage présélectionné d'une gamme présélectionnée d'impacts.

5. La construction d'amortissage (140) selon l'une ou l'autre des revendications précédentes suivant laquelle le nombre couches (142, 143, 145) est supérieur à deux et les couches comportent une matière de mousse flexible (141) soudée entre elles en sandwich disposées en multi-couches.

6. La construction d'amortissage (140) selon l'une ou l'autre des revendications précédentes suivant laquelle les empreintes (144) sont situées sous forme de motifs en grille répétitive essentiellement quadratique.

7. La construction d'amortissage (140) selon la revendication 6 suivant laquelle les formes et empreintes géométriques (144) prévoient une pluralité de formes prismatiques tronquées lors de leur inclusion en motif quadratique répétitif.

8. La construction d'amortissage (140) selon l'une ou l'autre des revendications 1 à 6 suivant laquelle chaque empreinte (144) est sous forme d'un polygone y compris une pluralité de parois en rapport essentiellement vertical par rapport à un plan défini par ledit premier côté (146) et ayant une extrémité refermée étanche en position opposée audit premier côté (146).

9. La construction d'amortissage (140) selon l'une ou l'autre des revendications précédentes suivant laquelle les formes et empreintes géométriques (144) prévoient une pluralité d'orifices tubulaires (147) qui s étendent depuis ledit premier côté jusqu'audit deuxième côté.
